# FASCICULE DE BREVET EUROPEEN

(11) **EP 0 814 580 B1**
(45) Date de publication et mention de la délivrance du brevet: **20.12.2000**
(21) Numéro de dépôt: 97460021.5
(22) Date de dépôt: 11.06.1997
(51) Int. Cl.: H04J 3/16

(54) **Multiplexeur hybride**
Hybrider Multiplexer
Hybrid multiplexer

(30) Priorité: 19.06.1996 FR 9607836
(43) Date de publication de la demande: 29.12.1997
(73) Titulaire: FRANCE TELECOM SA, 75015 Paris (FR)
(72) Inventeur: Le Meur, Jean-Paul, 22300 Lannion (FR)
(74) Mandataire: Maillet, Alain

(56) Documents cités:
- EP-A- 0 656 704
- EP-A- 0 713 346
- US-A- 5 467 349
- TSONG-HO WU: "COST-EFFECTIVE NETWORK EVOLUTION" IEEE COMMUNICATIONS MAGAZINE, no. 9, septembre 1993, pages 64-73, XP000394872
- KEN-ICHI SATO ET AL: "BROAD-BAND ATM NETWORK ARCHITECTURE BASED ON VIRTUAL PATHS" IEEE TRANSACTIONS ON COMMUNICATIONS, vol. 38, no. 8, 1 août 1990, pages 1212-1222, XP000162510
- YONG-HEE JEON ET AL: "PRIORITY SERVICE DISCIPLINES AND VOICE CELL DISCARDING SCHEMES IN ATM NETWORKS" PROCEEDINGS OF THE SOUTHEAST CONFERENCE (SOUTHEASTCON), BIRMINGHAM, ALABAMA, APR. 12 - 15, 1992, vol. 1, 12 avril 1992, INSTITUTE OF ELECTRICAL AND ELECTRONICS ENGINEERS, pages 375-384, XP000338748
- COOPER C S: "HIGH-SPEED NETWORKS: THE EMERGENCE OF TECHNOLOGIES FOR MULTISERVICE SUPPORT" COMPUTER COMMUNICATIONS, vol. 14, no. 1, 1 janvier 1991, pages 27-43, XP000175343
- HONIG K ET AL: "THE ATM MEDIUM ADAPTER: TRANSMISSION COMPONENTS FOR B-ISDN" PHILIPS TELECOMMUNICATION REVIEW, vol. 52, no. 1, 1 mars 1994, pages 39-45, XP000435515

## Description

La présente invention concerne un multiplexeur synchrone à concentration ATM que l'on désignera plus simplement par "multiplexeur hybride", cette appellation étant justifiée par la suite.

Le Réseau Numérique à Intégration de Services à large bande, dit RNIS-LB (ou en anglais *B-ISDN),* implique trois axes de développement:
- le mode de transfert ATM (en anglais *Asynchrous Transfer Mode*) pour transporter, dans le réseau RNIS-LB, des informations groupées en cellules ATM, chaque cellule ATM étant constituée de 53 octets dont 5 octets d'en-tête suivis de 48 octets d'information;
- l'utilisation générale en transmission du mode de transfert synchrone STM (en anglais *Synchronous Transfer Mode*) dont la brique de base est la trame de ligne STM-n qui répond aux spécifications SDH (en anglais *Synchronous Digital Hierarchy*) dont la terminologie est définie dans l'Avis G.707 de l'UIT-T; et
- la généralisation progressive de la fibre optique dans les liaisons du réseau interurbain, dans les liaisons intra-ZAA et même dans les liaisons locales, en plus de moyens classiques de liaison tels que câbles coaxiaux, paires torsadées.

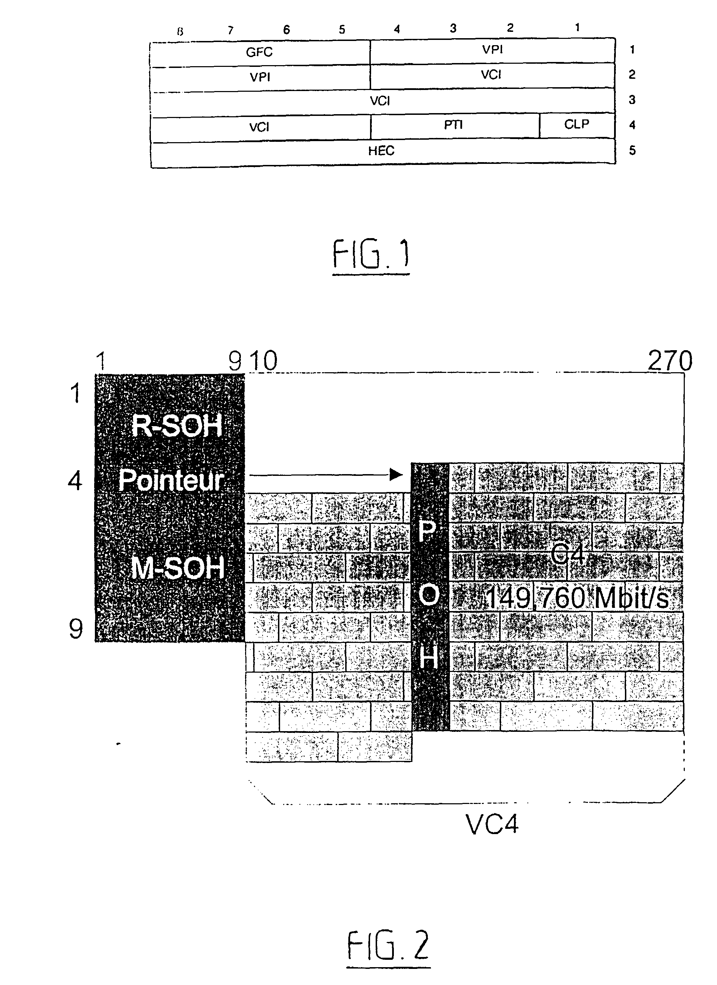

L'Avis I.361 définit le codage des cellules ATM, en particulier la structure de l'en-tête ATM qui est rappelée à la Fig. 1. A l'interface abonné-réseau, cette structure comprend un premier champ de 4 bits appelé champ de contrôle de flux GFC (*General Flow Control*). Le second champ est le champ de routage composé d'un champ VCI (*Virtual Channel Identifier*) de 16 bits et d'un champ VPI (*Virtual Path Identifier*) de 8 bits. Les autres champs PTI, CLP et HEC (en angais *Head Error Check*) ne seront pas détaillés ici car ils ne sont pas concernés dans la présente invention. A l'interface entre réseaux, le format de l'en-tête est conservé à l'exception du champ GFC qui est remplacé par un champ supplémentaire VPI de 4 bits supplémentaires.

Ainsi, le numéro de voie logique ATM est scindé en deux identificateurs complémentaires qui différencient deux entités hiérarchisées d'organisation de l'acheminement: le conduit logique VP qui est repéré par son VPI et la voie logique VC qui est repérée par son VCI à l'intérieur d'un conduit logique.

A noter aussi que, dans le mode de transfert ATM, on utilise, à des fins de synchronisation et de bourrage, des cellules vides qui occupent les intervalles de temps non occupés par des cellules utiles.

En mode synchrone SDH, il existe deux niveaux de multiplexage. Le premier, dit niveau section, consiste à multiplexer octet par octet des trames de lignes (STM-n) synchrones et en phase. Il est ainsi possible de pouvoir monter facilement en débit. Le second, dit niveau conduit, concerne un conteneur virtuel VCi lequel est formé d'un conteneur Ci, qui renferme l'information utile, et d'un surdébit POH, qui est destiné aux opérations d'exploitation et de maintenance. Pour constituer un conteneur virtuel VCi, un multiplexeur synchrone SDH assemble, éventuellement, des conteneurs virtuels VCj portés par plusieurs unités d'affluent à plus faible débit que le conteneur virtuel VCi.

A titre d'exemple, on a représenté, à la Fig. 2, la structure d'une trame STM-1 (appelée module de transport synchrone de type 1) du mode de transmission synchrone SDH. Cette trame de la Fig. 2, prévue pour contenir un conteneur virtuel VC4, comprend un ensemble d'octets constitué de 9 lignes et 270 colonnes, soit 2430 octets. Cette trame possède une récurrence de 125 microsecondes. La fréquence de répétition de la trame et sa fréquence de génération est de 8 kHz, ce qui correspond en débit à 9 x 270 octets x 8 kHz = 155,520 Mbit/s. Les neuf premières colonnes contiennent le surdébit de section SOH (*Section Overhead*) relatif aux informations de services associées à la gestion de la section de ligne, plus le pointeur AU-4 sur l'unité administrative de type 4. Une autre colonne de neuf octets est consacrée au surdébit de conduit POH (*Path Overhead*) relatif aux informations de service associées à la gestion du conteneur virtuel VC4. Le pointeur AU-4 est utilisé pour obtenir le premier octet du conteneur virtuel VC4, lequel peut, en principe, se trouver n'importe où dans la trame STM-1, sauf dans les neuf premières colonnes réservées au surdébit de section SOH. Le conteneur VC4 correspond à un débit utile de 149,760 Mbit/s.

En ce qui concerne la hiérarchie adoptée par les européens, la liste des divers conteneurs est la suivante: VC4 (149,76 Mbit/s), VC3 (48,384 Mbit/s), VC2 (6,784 Mbit/s) et VC12 (2,176 Mbit/s). En fait, en Europe, le conteneur VC4 est un point de passage obligé et la formation d'une trame STM-1 se termine toujours par l'insertion dans celle-ci d'un VC4 et de son pointeur.

La norme permet encore une souplesse supplémentaire par l'utilisation de la concaténation. Celle-ci consiste à assembler des conteneurs de même type pour obtenir des tailles plus appropriées aux besoins. Un conteneur VC4 peut contenir au maximum 3 VC3 ou 63 VC12. Actuellement, une première génération d'équipements SDH est prévue pour gérer les conteneurs VC12, VC3 et VC4.

Pour être complet, il faut encore noter qu'il est prévu une trame STM-4 à débit en ligne de 622 Mbit/s, dans laquelle l'association de 4 VC4 permet, par exemple, d'obtenir un conduit VC4-4c de capacité 599,04 Mbit/S. Une trame STM-16 est également envisagée pour équiper le réseau interurbain en intra-ZAA de systèmes de lignes à très grande capacité.

Après avoir défini ci-dessus des moyens de transfert ATM, d'une part, et des moyens de transmission SDH, d'autre part, il faut examiner les divers problèmes qui se posent quand on cherche à les faire travailler ensemble, que ces problèmes soient dus aux natures différentes des moyens choisis ou qu'ils soient dus à des moyens qui préexistent dans la situation actuelle.

Ainsi, il est actuellement difficile de prévoir quel va être le volume de trafic réel engendré par les usagers ATM. Il est probable que, pour la plus grande partie, les débits utilisés par les usagers ne dépasseront pas quelques Mbit/s. La plupart des utilisateurs de liaisons numériques se satisfont de quelques dizaines ou centaines de Kbit/s. Les infrastructures de réseaux privés actuels desservant pourtant des zones à forte concentration sont actuellement à 34 Mbit/s. Même avec de nouveaux services, les débits utiles resteront relativement faibles comparés aux débits potentiels des interfaces; de même, entre les équipements de réseau, il n'est pas certain que les débits ATM soient très importants.

D'autre part, raccorder un seul usager ATM par un lien STM-1/VC4 équivaut en terme de ressources nécessaires à raccorder 15 à 20 000 abonnés téléphoniques supplémentaires. Les équipements ATM risquent donc de consommer sans modération des cellules vides. Or, les cellules vides ne sont pas reconnues par les équipements SDH et sont donc transmises comme le trafic utile. De ce point de vue, l'utilisation du conduit VC4 n'est donc pas optimale. Il faut savoir qu'en mode ATM, pour avoir des performances acceptables, on recommande une charge utile par lien ATM de 80 %, c'est-à-dire que les 20 % qui restent sont occupés par des cellules vides.

On peut, pour tenter d'améliorer l'utilisation du conduit VC4, procéder à un multiplexage ATM, c'est-à-dire partager ce conduit SDH entre plusieurs utilisateurs à l'aide d'un multiplexeur ATM qui récupère les conduits logiques VP sur des conduits entrants sous-utilisés et les rassemble dans un conduit unique sortant. Le fonctionnement d'un multiplexeur ATM est très similaire à celui d'un brasseur ATM de conduits logiques VP. La fonction peut d'ailleurs être réalisée avec les mêmes matrices, par exemple une matrice 16 ports utilisée en 15 vers 1. Toutefois la connaissance des tables de routage des conduits logiques VP est nécessaire puisque deux VPI identiques peuvent être utilisés sur deux liens affluents différents. Il en résulte que, dans le multiplexeur ATM, il est nécessaire de traduire tous les VPI.

Le multiplexage ATM, déterministe ou statistique, est une solution permettant de réduire le poids de l'ATM sur la transmission. Mais il ne convient pas dans tous les cas, par exemple celui de directions différentes, celui du multiplexage avec du trafic synchrone, cas qui doit être envisagé comme on le verra ci-dessous, ou celui d'un nombre réduit de liens affluents. La complexité des fonctions et de la gestion peut aussi être un frein à la généralisation de la solution du multiplexage ATM, comme on va le voir.

Le multiplexage ATM pose aussi des problèmes au niveau de la gestion du trafic. A l'accès usager par exemple, il est nécessaire de vérifier avant multiplexage que chaque utilisateur ne dépasse pas le débit qui lui est alloué par conduit logique VP. Un tel dépassement pourrait avoir des conséquences fâcheuses sur le trafic des autres usagers. Des fonctions complexes de contrôle du débit par conduit logique VP sont nécessaires. Des moyens pour résoudre ces fonctions sont prévus, de façon systématique, aux accès des brasseurs ATM. Les prévoir au niveau d'un multiplexeur ATM d'abonnés ne ferait qu'une duplication et entraînerait un surcoût global. Il en est de même pour d'autres fonctions comme l'espacement ou le traitement des flux de maintenance, etc. Toutes ces fonctions sont nécessaires dès lors qu'on traite l'entité VP. A partir du moment où elles existent en standard sur les brasseurs ATM, il devient inutile et onéreux de les remettre dans un multiplexeur local ATM d'abonnés.

Ces fonctions ont également un impact important sur la gestion de l'équipement qui s'en trouve alourdie. Dans un multiplexeur ATM, il faut configurer les connexions, pouvoir les modifier, détecter les coupures, évaluer la performance et compter les cellules. Par exemple, une modification de débit impose d'agir rapidement sur la fonction police, voire de traiter des protocoles de réservation rapide. Un lien permanent est nécessaire avec le système de gestion du réseau ATM. Les contextes doivent être sauvegardés par connexion. Toutes ces fonctions augmentent le poids de la gestion qui devient un facteur important dans le coût de l'équipement, spécialement lorsqu'il s'agit de multiplexeurs d'abonnés.

L'éventuelle congestion dans un multiplexeur ATM nécessite également de limiter la charge du conduit ATM sortant. La valeur théorique de 80 % est généralement prise pour aboutir à des performances acceptables. Seuls 120 Mbit/s sont donc disponibles en sortie d'un multiplexeur ATM vers une interface ATM/STM-1. L'optimisation du conduit n'est donc que partielle.

En résumé, comme on l'a vu ci-dessus, les prévisions actuelles de trafic donnent à penser que dans un proche avenir, dix à vingt ans, l'utilisation des conduits SDH et du conduit VC4 sera loin d'être optimale; que les conduits SDH vont transmettre trop de cellules vides; qu'un multiplexage est nécessaire, mais que le multiplexage purement ATM ne constituait pas une solution satisfaisante.

Un objet de la présente invention consiste à prévoir un multiplexage autre que le multiplexage ATM dont on a décrit ci-dessus les inconvénients et les insuffisances dues principalement à l'utilisation non optimale des conduits SDH, par exemple du conduit VC4, telle qu'elle apparaît aujourd'hui vraisemblable. Dans la suite, ce multiplexeur suivant l'invention sera appelé "multiplexeur hybride", comme on l'a annoncé dans le préambule.

Il faut également tenir compte de la situation existante. Actuellement les interfaces qui sont utilisées sur des équipements ATM publics sont principalement le 34 Mbit/s PDH (en anglais *Plesiochronous Digital Hierarchy*) et le 155 Mbit/s SDH. Certains îlots PDH sont susceptibles de subsister pour un temps dans des réseaux de desserte. Il a été nécessaire de prévoir des équipements de passerelle PDH/SDH. Ainsi, en cas d'interfonctionnement avec la PDH, le VC12 est utilisé après justification positive pour transporter le 2,048 Mbit/s, le VC3 pour transporter le 34,368 Mbit/s et le VC4 pour transporter le 139,264 Mbit/s. Actuellement, la première génération d'équipements SDH gère en priorité les conteneurs VC12, VC3 et VC4, principalement parce qu'ils assurent avant tout la fonction de passerelle PDH/SDH. Il n'est pourtant pas souhaitable de conserver des interfaces PDH dans un environnement SDH, car la passerelle PDH/SDH est toujours consommatrice de bande passante, spécialement dans le cas du 34 Mbit/s.

Un objet de la présente invention consiste à prévoir un multiplexage hybride qui offre aussi une solution au problème posé par l'existence d'îlots PDH.

Le multiplexeur hybride traite le flux ATM globalement sans traduction du VPI. Le flux ATM sur un lien affluent SDH est retransmis tel quel dans un conduit SDH de sortie mieux dimensionné, le multiplexage se faisant au niveau SDH. Mais, à la différence d'un mux SDH, le mux hybride traite les cellules de niveau physique. Il agit donc comme une passerelle de niveau conduit. Des fonctions comme le cadrage cellule ou la détection d'erreurs HEC y sont réalisées, mais le fait de ne pas remonter au VP apporte des simplifications par rapport au multiplexage ATM.

Suivant une caractéristique de la présente invention, il est prévu un multiplexeur hybride comportant:
- une pluralité de liens entrants SDH transportant du trafic ATM,
- affectés respectivement à chaque lien entrant SDH transportant du trafic ATM,
   des premiers moyens de réception pour recevoir le contenu du conteneur SDH de grande capacité transmis dans une trame SDH,
   des premiers moyens de concentration pour réduire le nombre de cellules ATM du conteneur reçu dans les premiers moyens de réception en éliminant les cellules vides qui y étaient contenues,
   des moyens de génération pour engendrer un conteneur SDH de plus faible capacité avec les cellules ATM délivrées par les moyens de concentration, en leur ajoutant convenablement des cellules vides de bourrage,
- des moyens de multiplexage pour réaliser le multiplexage synchrone SDH des conteneurs de faibles capacités engendrés dans les moyens de génération, en engendrant ainsi un nouveau conteneur SDH de grande capacité,
- des moyens de transmission pour transmettre le conteneur SDH de grande capacité engendré par les moyens de multiplexage sur un lien sortant SDH dans une trame SDH,
- un lien sortant SDH.

Suivant une autre caractéristique, le multiplexeur hybride comprend encore:
- une pluralité de liens entrants PDH transportant un conteneur PDH,
- affecté respectivement à chaque lien entrant SDH transportant un conteneur PDH,
   des seconds moyens de réception pour revevoir le contenu du conteneur PDH,
   des seconds moyens de concentration pour réduire le contenu du conteneur PDH reçus dans les seconds moyens de réception en éliminimant le surdébit d'exploitation et de maintenance de la trame PDH,
   des seconds moyens de génération pour engendrer un conteneur SDH de plus faible capacité avec le contenu restant PDH,
- des moyens pour réaliser le multiplexage synchrone SDH non seulement des conteneurs de faible capacité engendrés par les premiers moyens de génération, mais encore des conteneurs SDH de faible capacité délivrés par les seconds moyens de génération, en engendrant ainsi un nouveau conteneur SDH de grande capacité,
- des moyens de transmission pour transmettre le conteneur SDH de grande capacité engendré par les moyens de multiplexage sur un lien sortant SDH dans une trame SDH,
- un lien sortant SDH.

Suivant une autre caractéristique, quand ledit conteneur PDH contient des cellules ATM, lesdits seconds moyens de concentration réalisent aussi la réduction des cellules ATM, en éliminant aussi les cellules vides, et lesdits seconds moyens de génération ajoutent aussi des cellules de bourrage convenables.

Suivant une autre caractéristique, ledit conteneur SDH de plus faible capacité engendré par lesdits premiers moyens de génération est le résultat d'une concaténation.

Suivant une autre caractéristique, quand un conteneur reçu contient des cellules ATM, une mémoire FiFo est prévue entre les moyens de concentration et les moyens de génération, pour mémoriser les cellules ATM délivrées par les moyens de concentration et les fournir aux moyens de génération.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:
la Fig. 1 est un diagramme montrant la structure d'une en-tête ATM,
la Fig. 2 est un diagramme montrant la structure d'une trame SDH,
la Fig. 3 est un bloc-diagramme schématique d'un multiplexeur hybride suivant l'invention,
la Fig. 4 est un bloc-diagramme schématique des premiers moyens de réception utilisés dans le multiplexeur hybride de la Fig. 3,
la Fig. 5 est un bloc-diagramme schématique des premiers moyens de génération utilisés dans le multiplexeur hybride de la Fig. 3,
la Fig. 6 est un diagramme montrant comment différents types d'unités d'affluent sont insérés dans un conduit VC4 d'une trame SDH STM-1, et
la Fig. 7 est un schéma montrant l'utilisation des conteneurs SDH de faibles capacités, telles qu'elle est offerte dans le multiplexeur hybride suivant l'invention.

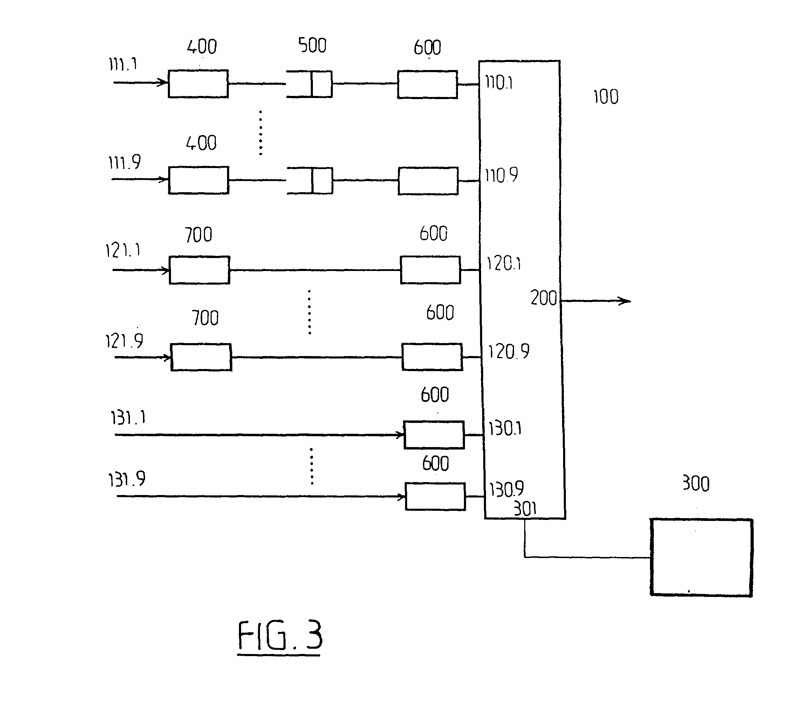

Le multiplexeur hybride de la Fig. 3 comprend un mux 100 comportant trois séries d'entrées 110.1 à 110.9, 120.1 à 120.9 et 130.1 à 130.9, et une sortie 200, le multiplexeur hybride ayant encore une entrée de commande 301 reliée à la sortie d'un calculateur de gestion et de commande 300.

La série d'entrées 110.1 à 110.9 reçoit des données provenant respectivement de liens entrants SDH 111.1 à 111.9 transportant des cellules ATM. Le lien entrant 111.1 est relié à l'entrée d'un récepteur 400 dont la sortie est reliée à l'entrée d'une file de mémoire FiFo 500 dont la sortie est reliée à l'entrée d'un générateur 600 dont la sortie est reliée à l'entrée 110.1 du mux 100. Dans la suite, on a supposé que chaque lien entrant 111.1 à 111.9 portait des trames SDH STM-1, mais certains d'entre eux peuvent porter des trames PDH transportant des cellules ATM qui seraient traitées d'une manière analogue pour l'homme du métier.

La série d'entrées 120.1 à 120.9 reçoit des données provenant respectivement de liens entrants 121.1 à 121.9 transportant des données non ATM transmises suivant le mode de transfert PDH à 34 Mbit/s. A titre d'exemple, le lien entrant 121.1 est relié à l'entrée d'un récepteur 700 dont la sortie est reliée à l'entrée d'un générateur 600 dont la sortie est reliée à l'entrée 120.1 du mux 100.

La série d'entrées 130.1 à 130.9 reçoit des données provenant respectivement de liens entrants 131.1 à 131.9 transportant des données non ATM transmises suivant le mode de transfert PDH à 2 Mbit/s. A titre d'exemple, le lien entrant 131.1 est relié directement à l'entrée d'un générateur 600 dont la sortie est reliée à l'entrée 130.1 du mux 100.

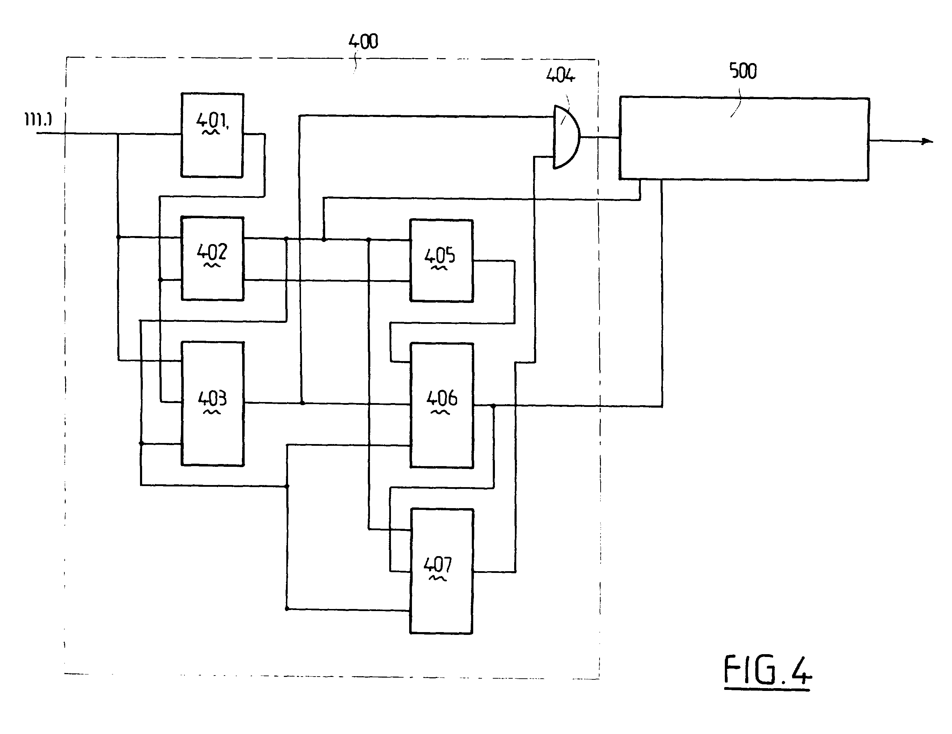

Dans le récepteur 400 de la Fig. 4, le lien entrant SDH 111.1 est relié, en parallèle, à un circuit de récupération d'horloge 401, à un circuit de cadrage 402 et à un convertisseur série/parallèle 403. Le circuit 401 récupère l'horloge SDH du lien entrant 111.1 d'une manière connue qui ne sera pas décrite ici. Le signal d'horloge récupérée est envoyé au circuit de cadrage 402 et au convertisseur 403. Le circuit de cadrage 402 détermine, aussi d'une manière connue, les limites d'octets et l'emplacement, dans la trame SDH montrée par exemple Fig. 2, des octets de surdébit SOH. Le circuit 402 commande le convertisseur série/parallèle 403 de manière à ce que le convertisseur 403 présente, un octet à la fois, des données à la mémoire 500 par l'intermédiaire d'une porte ET 404, à un circuit d'interprétation 405 du pointeur contenu dans le surdébit SOH, à un circuit de délimitation de cellules 406 et à un détecteur de cellules vides 407. Le circuit de cadrage 402 délivre aussi un signal d'horloge octet à la mémoire 500, au circuit 405, au circuit 406 et au détecteur de cellules vides 407. Le circuit de cadrage 402 fournit aussi, au circuit 405, des signaux de commande indiquant l'emplacement des octets de surdébit SOH.

Le fonctionnement du circuit d'interprétation 405 du pointeur est défini dans l'Avis G.707 de l'UIT-T. Il définit l'emplacement du surdébit du conteneur POH. Le circuit 405 fournit, au circuit de délimitation de cellules 406, une information pour indiquer si l'octet sortant du convertisseur 403 est ou non un octet utile.

Le circuit de délimitation de cellules 406 fonctionne en employant le champ HEC de l'en-tête de cellule ATM d'une manière connue. Il engendre des signaux indiquant le début de chaque cellule reçue et envoie ces signaux à une entrée de commande de la mémoire 500, de manière que le surdébit SOH et le surdébit POH n'y soient pas enregistrés. Des détails et le fonctionnement du circuit de délimitation de cellules 406 sont donnés dans l'Avis I.432 de l'UIT-T.

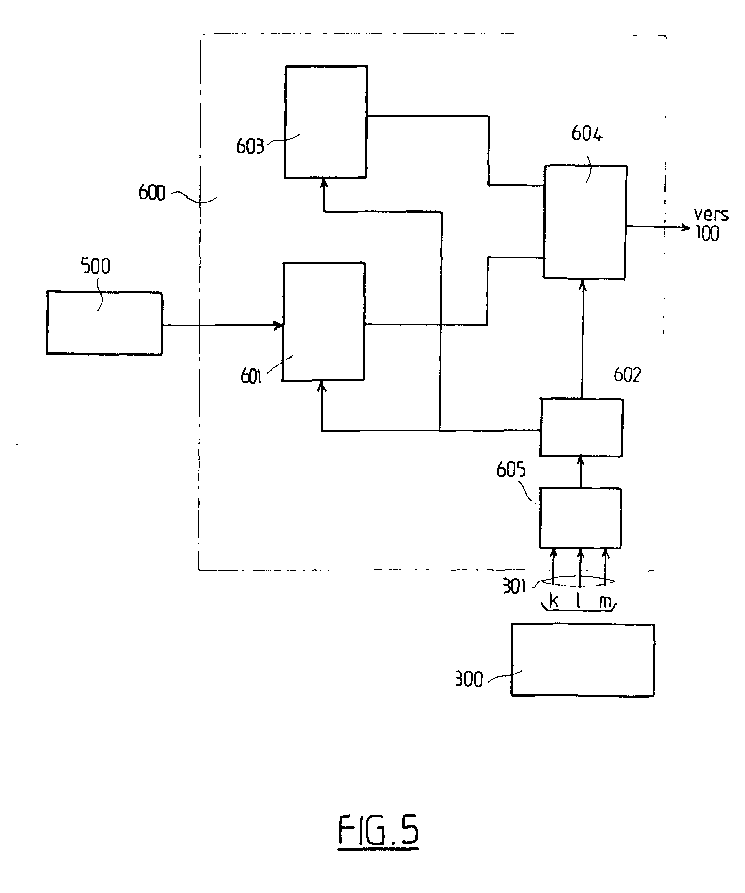

Le générateur 600, montré à la Fig. 5, a pour fonction de former, à partir des cellules ATM mémorisées dans la mémoire FiFo 500, un conteneur virtuel et d'y insérer les sur-débits POH relatifs à ce conteneur virtuel pour en faire un véritable conteneur virtuel SDH qui sera ensuite multiplexé dans le mux 100 avec d'autres conteneurs virtuels à l'intérieur d'une trame STM-1/VC4.

Dans le générateur 600, l'entrée de données d'un circuit d'insertion de données 601 est relié à la sortie de données de la mémoire FiFo 500. Le circuit 601 a une entrée de commande reliée à une sortie de sélection d'un circuit de formation 602 qui engendre l'enveloppe d'un conteneur virtuel VC. Le circuit 602 est également relié aux entrées de sélection d'un circuit de génération 603, qui engendre le sur-débit POH affecté au conteneur virtuel VC, et d'un circuit de génération 604 qui engendre le conteneur virtuel VC. La sortie du circuit 603 est reliée à une première entrée de données du circuit 604. La sortie du circuit 601 est reliée à une seconde entrée de données du circuit 604. La sortie du circuit 604 est reliée à l'entrée 110.1 du mux 100.

L'entrée de commande du circuit 602 est reliée à la sortie d'un circuit de sélection 605 du conteneur virtuel dont les trois entrées de commande k, l et m sont reliées par l'entrée 301 au circuit de gestion 300. Les entrées de commande k, l et m correspondent aux valeurs de trois paramètres K, L et M dont le rôle va maintenant être défini.

Comme on le rappelle en relation avec la Fig. 2, la trame SDH STM-1 comporte 2430 octets structurés en 270 colonnes de 9 lignes. Le multiplexeur SDH 100, Fig. 3, permet d'assembler à sa sortie 200, dans une trame STM-1, différents types d'unités d'affluent à plus faible débit qui sont appliquées à ces entrées 110.1 à 110.9, 120.1 à 120.9 et 130.1 à 130.9. Bien entendu, il faut que la somme des débits d'unités d'affluent soit inférieure au débit d'un conteneur virtuel VC4, soit 149 760 Mbit/s.

Suivant la terminologie SDH, chaque unité d'affluent est désigné par TU (en anglais *Tributary Unit*). Dans le conteneur virtuel VC4, chaque unité TU est une structure synchrone occupant un certain nombre de colonnes dans la trame. Dans la pratique, les unités TU sont d'abord insérées dans le conteneur virtuel VC4 qui lui-même est ensuite inséré dans la trame.

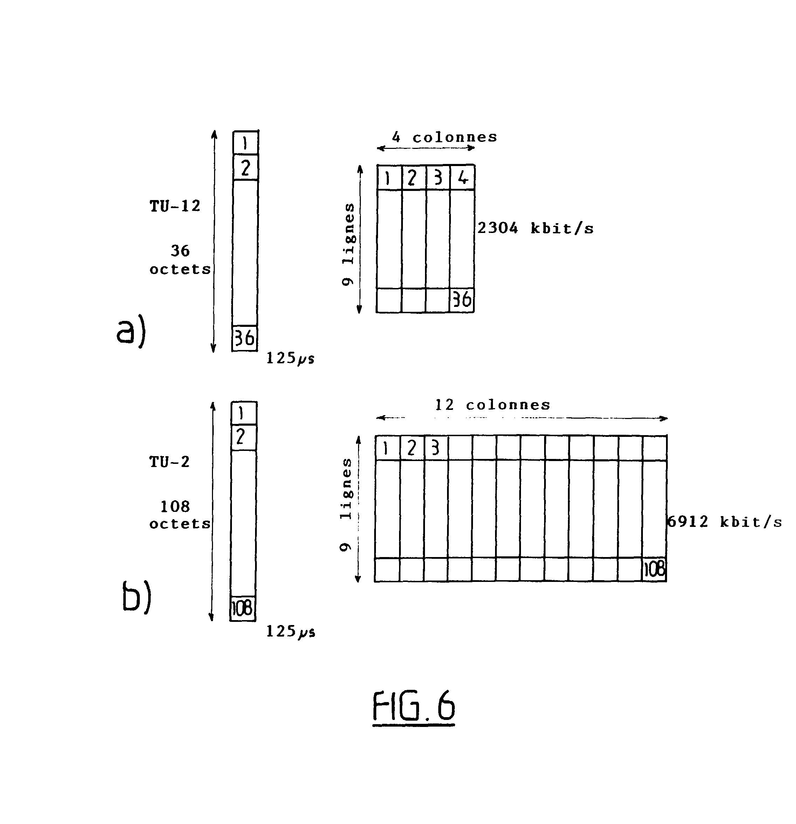

Les diagrammes a et b de la Fig. 6 donnent les tailles respectives et les formats respectifs de deux unités TU, illustrant comment ils sont insérés à des emplacements bien précis dans le conteneur virtuel VC4. Ces diagrammes relatifs aux unités TU-12 et TU-2 sont directement tirés de la figure 10-1 de la recommandation G.707, déjà citée, et leurs méthodes d'insertion est décrite au paragraphe 7 de la recommandation G.707.

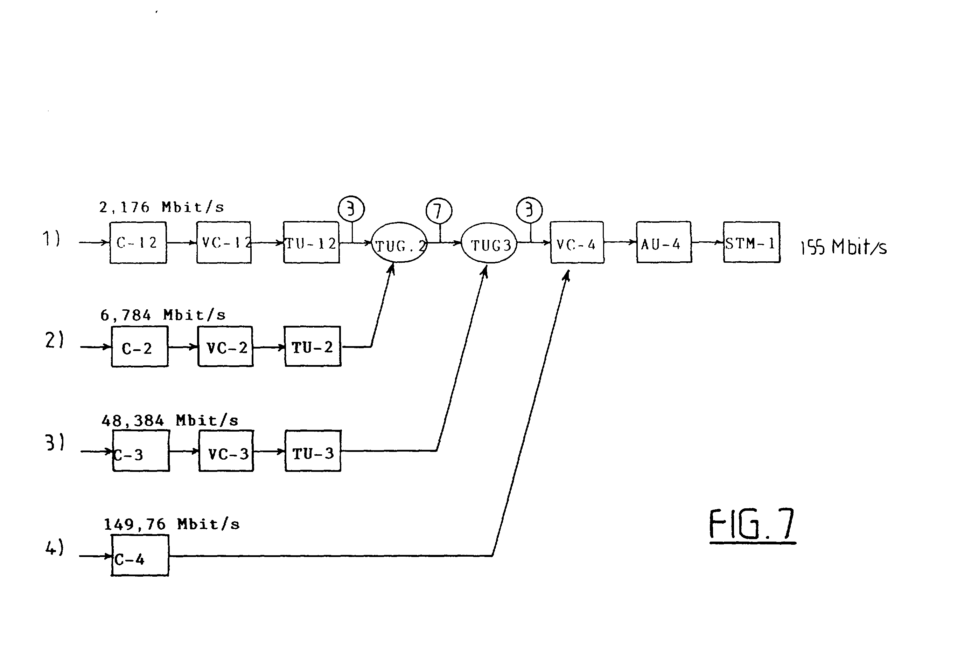

L'unité TU-12, Fig. 6a, a un débit de 2304 kbit/s et se compose de 38 octets, toutes les 125 µs, qui, dans le conduit virtuel VC4, occupent 4 colonnes de 9 lignes. L'unité TU-2, Fig, 6b, a un débit de 6912 kbit/s et se compose de 108 octets, toutes les 125 µs, qui, dans le conduit virtuel VC4, occupent 12 colonnes de 9 lignes. La figure 7-10 de la recommandation G.707 donne, en fonction de trois paramètres K, L et M, l'affectation et la numérotation respectives des unités TU-12, TU-2, etc. que l'opérateur du mux SDH peut, au moyen du circuit de gestion 300, utiliser dans la trame STM-1. Les données de ces unités d'affluent sont alors insérées dans les colonnes associées. En pratique, les coefficients K, L et M définissent les adresses des colonnes dans lesquelles sont insérées les données.

Revenant à la Fig. 5, l'opérateur peut, à l'aide du circuit de gestion 300 et connaissant le débit demandé par le circuit 601, c'est-à-dire par la mémoire 500, décider l'envoi de paramètres K, L et M, par l'intermédiaire de l'entrée 301, aux entrées de commande k, l et m du circuit de sélection 605 qui contrôle, par le circuit de formation 602, le circuit d'insertion de données 601.

En pratique, le débit de cellules ATM de la mémoire 500 peut être soit inférieur ou égal à celui d'une unité TU-12, soit supérieur à celui d'une unité TU-12 mais inférieur ou égal à celui d'une unité TU-2, soit supérieur à celui d'une unité TU-2 mais inférieur à celui d'une unité TU-3, soit supérieur à celui d'une unité TU-3 mais inférieur à celui d'un VC4.

Une grande variété de situations est possible, comme le montrent les diagrammes de la Fig. 7 qui sont relatifs à des situations que l'on peut rencontrer en Europe, mais que l'homme du métier pourrait aisément modifier pour satisfaire aux normes choisies par d'autres pays.

A titre d'exemple, à la Fig. 7, à gauche, les quatre diagrammes (1) à (4) convergent, à droite, vers un conduit virtuel VC4 transmis dans une trame STM-1.

Le diagramme (1) est relatif initialement aux conduits ayant un débit de 2,176 Mbit/s. Un conduit C-12 de ce débit est converti en conduit virtuel VC-12 en lui adjoignant un surdébit de conduit POH. Le conduit virtuel VC-12 est introduit dans une unité TU-12 dont le pointeur permet de connaître l'emplacement du conduit virtuel VC-12. A droite du rectangle TU-12, le chiffre 3 indique qu'il est possible de multiplexer avec ou sans concaténation jusqu'à trois unités TU-12 pour obtenir un conduit virtuel ayant un débit pratiquement équivalent à un conduit virtuel VC-2 de débit 6,784 Mbit/s.

La case TUG.2 indique simplement le groupe de 12 colonnes qui correspond soit au groupe de la Fig. 6b pour une unité TU-2, soit à trois groupes de la Fig. 6a pour le multiplexage de trois TU-12. Il en serait de même par analogie pour la case suivante TUG.3.

Plus à gauche, le chiffre 7 indique le multiplexage maximum, avec ou sans concaténation, pour obtenir un débit pratiquement équivalent à un conduit virtuel VC-3 de débit 48,384 Mbit/s. Encore plus à gauche, le chiffre 3 indique le multiplexage maximum, avec ou sans concaténation, pour obtenir un débit pratiquement équivalent à un conduit virtuel VC-4 de débit 149,76 Mbit/s. Enfin, le diagramme (1) se termine par le conduit virtuel VC-4, le pointeur AU-4 et la trame STM-1.

Les diagrammes (2) et (3) s'interprètent comme le diagramme (1).

Le diagramme (4) est relatif initialement à un conduit C-4 qui est converti en conduit virtuel VC-4 pour être inséré dans la trame STM-1.

Comme on l'a mentionné ci-dessus, le débit en cellules ATM de la mémoire 500 peut être trouvé supérieur à celui d'un conduit C2 mais inférieur à celui de deux conduits C2. Dans ce cas, il est possible, dans le générateur 600, de procéder à une concaténation de deux unités TU du même type en répartissant les données cycliquement (octet par octet) sur les colonnes correspondantes.

A titre d'exemple, on va décrire l'insertion de cellules ATM dans deux conduits C2 concaténés. On rencontre successivement les différentes phases suivantes:

Phase C2.2c - Les cellules ATM sont insérées dans un conteneur ayant la capacité de deux conduits C2. Les octets sont répartis alternativement dans chaque conduit C2.

Phase VC2.2c - A chaque conduit C2, est ajouté un POH (surdébit de maintenance du conteneur) pour former le conduit virtuel VC2.2c.

Phase TU2.2c - Chaque conduit virtuel VC2 est ensuite introduit dans un TU2. Le pointeur de TU2 permet de connaître l'emplacement du VC2 dans le TU2. Les deux TU2 du TU2.2c ont la même valeur de pointeur comme le veut la concaténation.

Phase VC4 - Les deux TU2 sont ensuite insérés dans le VC4 selon leur numéro choisi par l'opérateur. Un VC4 peut contenir jusqu'à 21 TU2. Chaque TU2 occupe 12 colonnes dans le VC4 à des emplacements bien précis et figés. Le tableau en annexe donne les colonnes occupées par les TU2 en fonction de leur numéro. En fait, ce numéro est donné par les trois paramètres K, L, M. Par exemple, si l'opérateur choisit d'utiliser les deux premiers TU2 (K=1, L=1, M=0 et K=1, L=2, M=0), les colonnes utilisées seront les colonnes 10, 13, 31, 34, 52, 55, etc. Les colonnes non utilisées sont laissées libres pour un autre affluent éventuellement. Un POH complète le VC4.

Phase AU4 - Le VC4 est ensuite introduit dans l'AU4. Le pointeur d'AU4 permet de connaître l'emplacement du VC4 dans l'AU4.

Phase STM-1 - L'AU4 est ensuite introduit dans la trame à un emplacement bien précis et figé. Le SOH (sur-débit de maintenance de la trame) est inséré.

Comme on le voit, il n'y a que deux niveaux de pointeurs, VC2 dans TU2 et VC4 dans AU4. En effet, dans le réseau SDH, un VC4 peut changer de trame STM-1, la valeur de pointeur pouvant être modifiée. De la même façon, le VC2 peut changer de TU2 au cours de son parcours dans le réseau SDH.

Ces pointeurs sont ensuite utilisés par la partie réception pour récupérer les conteneurs virtuels. Les opérations sont les suivantes:

Phase STM-1 - La trame STM-1 est récupérée, le SOH (sur-débit de maintenance de la trame) est analysé et l'AU4 est extrait facilement car sa position est connue et figée.

Phase AU4 - La valeur du pointeur est analysée pour extraire le VC4, cette valeur pouvant éventuellement varier au cours du temps.

Phase VC4 - Le POH de VC4 est analysé et les deux TU2 sont extraits du VC4. Chaque TU2 occupe en effet un emplacement connu, figé dans le VC4 et déterminé par son numéro. Dans l'exemple mentionné ci-dessus, l'opérateur ayant choisi d'utiliser les deux premiers TU2 (K=1, L=1, M=0 et K=1, L=2, M=0), les colonnes lues sont les colonnes 10, 13, 31, 34, 52, 55, etc.

Phase TU2.2c - La valeur des pointeurs de TU2 est analysée pour extraire chaque VC2. Les différences de valeur sont compensées (les VC2 sont concaténés).

Phase C2.2c - Les cellules ATM sont extraites des conteneurs C2 concaténés.

Dans un récepteur 700 relié à une des entrées 121.1 à 121.9 qui reçoivent des données non ATM transmises suivant le mode de transfert PDH à 34 Mbit/s, sont éliminés le surdébit d'exploitation et de maintenance de la trame entrant PDH. L'élimination se fait par des moyens classiques. Ensuite, le générateur 600 correspondant a une structure et un fonctionnement semblables à ceux du générateur décrit ci-dessus.

Chacun des générateurs 600 reliés aux entrées 131. 1 à 131.9 fonctionne comme on l'a décrit ci-dessus.

On vient de décrire ci-dessus la structure d'un mux hybride suivant l'invention en en expliquant sommairement le fonctionnement. La structure d'un démux hybride correspondant et son fonctionnement se déduisent, pour l'homme du métier, pratiquement par symétrie.

**Tableau 1**

| TU-2 Address | | | TU-2 Column Number | | | | | | | | | | | |
|---|---|---|---|---|---|---|---|---|---|---|---|---|---|---|
| K | L | M | 1 | 2 | 3 | 4 | 5 | 6 | 7 | 8 | 9 | 10 | 11 | 12 |
| 1 | 1 | 0 | 10 | 31 | 52 | 73 | 94 | 115 | 136 | 157 | 178 | 199 | 220 | 241 |
| 1 | 2 | 0 | 13 | 34 | 55 | 76 | 97 | 118 | 139 | 160 | 181 | 202 | 223 | 244 |
| 1 | 3 | 0 | 16 | 37 | 58 | 79 | 100 | 121 | 142 | 163 | 184 | 205 | 226 | 247 |
| 1 | 4 | 0 | 19 | 40 | 61 | 82 | 103 | 124 | 145 | 166 | 187 | 208 | 229 | 250 |
| 1 | 5 | 0 | 22 | 43 | 64 | 85 | 106 | 127 | 148 | 169 | 190 | 211 | 232 | 253 |
| 1 | 6 | 0 | 25 | 46 | 67 | 88 | 109 | 130 | 151 | 172 | 193 | 214 | 235 | 256 |
| 1 | 7 | 0 | 28 | 49 | 70 | 91 | 112 | 133 | 154 | 175 | 196 | 217 | 238 | 259 |
| 2 | 1 | 0 | 11 | 32 | 53 | 74 | 95 | 116 | 137 | 158 | 179 | 200 | 221 | 242 |
| 2 | 2 | 0 | 14 | 35 | 56 | 77 | 98 | 119 | 140 | 161 | 182 | 203 | 224 | 245 |
| 2 | 3 | 0 | 17 | 38 | 59 | 80 | 101 | 122 | 143 | 164 | 185 | 206 | 227 | 248 |
| 2 | 4 | 0 | 20 | 41 | 62 | 83 | 104 | 125 | 146 | 167 | 188 | 209 | 230 | 251 |
| 2 | 5 | 0 | 23 | 44 | 65 | 86 | 107 | 128 | 149 | 170 | 191 | 212 | 233 | 254 |
| 2 | 6 | 0 | 26 | 47 | 68 | 89 | 110 | 131 | 152 | 173 | 194 | 215 | 236 | 257 |
| 2 | 7 | 0 | 29 | 50 | 71 | 92 | 113 | 134 | 155 | 176 | 197 | 218 | 239 | 260 |
| 3 | 1 | 0 | 12 | 33 | 54 | 75 | 96 | 117 | 138 | 159 | 180 | 201 | 222 | 243 |
| 3 | 2 | 0 | 15 | 36 | 57 | 78 | 99 | 120 | 141 | 162 | 183 | 204 | 225 | 246 |
| 3 | 3 | 0 | 18 | 39 | 60 | 81 | 102 | 123 | 144 | 165 | 186 | 207 | 228 | 249 |
| 3 | 4 | 0 | 21 | 42 | 63 | 84 | 105 | 126 | 147 | 168 | 189 | 210 | 231 | 252 |
| 3 | 5 | 0 | 24 | 45 | 66 | 87 | 108 | 129 | 150 | 171 | 192 | 213 | 234 | 255 |
| 3 | 6 | 0 | 27 | 48 | 69 | 90 | 111 | 132 | 153 | 174 | 195 | 216 | 237 | 258 |
| 3 | 7 | 0 | 30 | 51 | 72 | 93 | 114 | 135 | 156 | 177 | 198 | 219 | 240 | 261 |

## Revendications

1. Multiplexeur hybride caractérisé en ce qu'il comprend:
- une pluralité de liens entrants SDH (111.1 à 111.9) transportant du trafic ATM,
- affecté respectivement à chaque lien entrant SDH transportant du trafic ATM,
des premiers moyens de réception (400) pour recevoir le contenu du conteneur SDH de grande capacité transmis dans une trame SDH,
des premiers moyens de concentration (500) pour réduire le nombre de cellules ATM du conteneur reçu dans les premiers moyens de réception (400), en éliminant les cellules vides qui y étaient contenues,
des moyens de génération (600) pour engendrer un conteneur SDH de faible capacité avec les cellules ATM délivrées par les moyens de concentration (500), en leur ajoutant convenablement des cellules vides de bourrage,
- des moyens de multiplexage (100) pour réaliser le multiplexage synchrone SDH des conteneurs de faibles capacités engendrés dans les moyens de génération (600), en engendrant ainsi un nouveau conteneur SDH de grande capacité,
- des moyens de transmission pour transmettre le conteneur SDH de grande capacité engendré par les moyens de multiplexage sur un lien sortant SDH dans une trame SDH,
- un lien sortant SDH (200).

2. Multiplexeur hybride suivant la revendication 1, caractérisé en ce qu'il comprend encore:
- une pluralité de liens entrants PDH (121.1 à 121.9) transportant un conteneur PDH,
- affecté respectivement à chaque lien entrant SDH transportant un conteneur PDH,
des seconds moyens de réception (700) pour revevoir le contenu du conteneur PDH,
des seconds moyens de concentration pour réduire le contenu du conteneur PDH reçus dans les seconds moyens de réception, en éliminimant le surdébit d'exploitation et de maintenance de la trame PDH,
des seconds moyens de génération (600) pour engendrer un conteneur SDH de faible capacité avec le contenu restant PDH,
- des moyens de multiplexage (100) pour réaliser le multiplexage synchrone SDH non seulement des conteneurs de faibles capacités engendrés par les premiers moyens de génération (600), mais encore des conteneurs SDH de faible capacité délivrés par les seconds moyens de génération (600), en engendrant ainsi un nouveau conteneur SDH de grande capacité,
- des moyens de transmission pour transmettre le conteneur SDH de grande capacité engendré par les moyens de multiplexage sur un lien sortant SDH dans une trame SDH,
- un lien sortant SDH (200).

3. Multiplexeur hybride suivant la revendication 1 ou 2, caractérisé en ce que ledit conteneur SDH de plus faible capacité engendré par lesdits premiers ou seconds moyens de génération est le résultat d'une concaténation.

4. Multiplexeur hybride suivant la revendication 2 ou 3, caractérisé en ce que, quand ledit conteneur PDH contient des cellules ATM, lesdits seconds moyens de concentration réalisent aussi la réduction des cellules ATM, en éliminant aussi les cellules vides, et lesdits seconds moyens de génération (600) ajoutent aussi des cellules de bourrage convenables.

5. Multiplexeur hybride suivant la revendication 2, 3 ou 4, caractérisé en ce que, quand un conteneur reçu contient des cellules ATM, une mémoire FiFo est prévue entre les moyens de concentration et les moyens de génération, pour mémoriser les cellules ATM délivrées par les moyens de concentration et les fournir aux moyens de génération.

## Patentansprüche

1. Hybrider Multiplexer, **dadurch gekennzeichnet,** daß er umfaßt:
- eine Vielzahl von eingehenden SDH-Bändern (111.1 bis 111.9), die den ATM-Verkehr transportieren,
- jeweils für jedes eingehende SDH-Band, das den ATM-Verkehr transportiert, bereitgestellt
- erste Empfangsmittel (400) zum Empfangen des Inhalts des SDH-Containers mit großer Kapazität, der in einem SDH-Rahmen übertragen wird,
- erste Konzentrationsmittel (500) zum Verringern der Zahl von ATM-Zellen des in den ersten Empfangsmitteln empfangenen Containers, indem die leeren Zellen beseitigt werden, die dort enthalten waren,
- Erzeugungsmittel (600) zum Erzeugen eines SDH-Containers mit geringer Kapazität mit den von den Konzentrationsmitteln (500) gelieferten ATM-Zellen, indem ihnen praktischerweise leere Füllzellen hinzugefügt werden,
- Multiplexierungsmittel (100) zum Ausführen der synchronen SDH-Multiplexierung der in den Erzeugungsmitteln (600) erzeugten Container mit geringen Kapazitäten, indem so ein neuer SDH-Container mit großer Kapazität erzeugt wird,
- Übertragungsmittel zum Übertragen des von den Multiplexierungsmitteln erzeugten SDH-Containers mit großer Kapazität auf einem abgehenden SDH-Band in einem SDH-Rahmen,
- ein abgehendes SDH-Band (200).

2. Hybrider Multiplexer nach Anspruch 1, **dadurch gekennzeichnet**, daß er noch umfaßt:
- eine Vielzahl von eingehenden PDH-Bändern (121.1 bis 121.9), die einen PDH-Container transportieren,
- jeweils für jedes eingehende SDH-Band, das einen PDH-Container transportiert, bereitgestellt
- zweite Empfangsmittel (700) zum Empfangen des Inhalts des PDH-Containers,
- zweite Konzentrationsmittel zum Verringern des Inhalts des in den zweiten Empfangsmitteln empfangenen PDH-Containers, indem die Nutzungs- und Erhaltungs-Überdatenrate für den PDH-Rahmen beseitigt wird,
- zweite Erzeugungsmittel (600) zum Erzeugen eines SDH-Containers mit geringer Kapazität mit dem verbleibenden PDH-Inhalt,
- Multiplexierungsmittel (100) zum Ausführen der synchronen SDH-Multiplexierung nicht nur der von den ersten Erzeugungsmitteln (600) erzeugten Container mit geringen Kapazitäten sondern auch der von den zweiten Erzeugungsmitteln (600) gelieferten SDH-Container mit geringer Kapazität, indem so ein neuer SDH-Container mit großer Kapazität erzeugt wird,
- Übertragungsmittel zum Übertragen des von den Multiplexierungsmitteln erzeugten SDH-Containers mit großer Kapazität auf einem abgehenden SDH-Band in einem SDH-Rahmen,
- ein abgehendes SDH-Band (200).

3. Hybrider Multiplexer nach Anspruch 1 oder 2, **dadurch gekennzeichnet**, daß der von den ersten oder zweiten Erzeugungsmitteln erzeugte SDH-Container mit geringerer Kapazität das Ergebnis einer Verkettung ist.

4. Hybrider Multiplexer nach Anspruch 2 oder 3, **dadurch gekennzeichnet**, daß wenn der PDH-Container ATM-Zellen enthält, die zweiten Konzentrationsmittel auch eine Verringerung der ATM-Zellen durchführen, indem ebenfalls die leeren Zellen beseitigt werden und die zweiten Erzeugungsmittel (600) auch geeignete Füllzellen hinzufügen.

5. Hybrider Multiplexer nach Anspruch 2, 3 oder 4, **dadurch gekennzeichnet,** daß wenn ein empfangener Container ATM-Zellen enthält, zwischen den Konzentrationsmitteln und den Erzeugungsmitteln ein FIFO-Speicher vorgesehen ist, um die von den Konzentrationsmitteln gelieferten ATM-Zellen zu speichern und sie an die Erzeugungsmittel zu liefern.

## Claims

1. Hybrid multiplexer characterised in that it comprises:
- a plurality of incoming SDH links (111.1 to 111.9) transporting ATM traffic,
- allocated respectively to each incoming SDH link transporting ATM traffic,
first receiving means (400) to receive the contents of the large-capacity SDH container transmitted in an SDH frame,
first concentration means (500) to reduce the number of ATM cells of the container received in the first receiving means (400), eliminating the empty cells which were contained in same,
generating means (600) to generate a low-capacity SDH container with the ATM cells supplied by the concentration means (500), appropriately adding to them empty padding cells,
- multiplexing means (100) to carry out the SDH synchronous multiplexing of the low-capacity containers generated in the generating means (600), thus generating a new large-capacity SDH container,
- transmission means to transmit the large-capacity SDH container generated by the multiplexing means on an outgoing SDH link in an SDH frame,
- an outgoing SDH link (200).

2. Hybrid multiplexer according to claim 1, characterised in that it also comprises:
- a plurality of incoming PDH links (121.1 to 121.9) transporting a PDH container,
- allocated respectively to each incoming SDII link transporting a PDH container,
second receiving means (700) to receive the contents of the PDH container,
second concentration means to reduce the contents of the PDH container received in the second receiving means, eliminating the operation and maintenance overhead of the PDH frame,
second generating means (600) to generate a low-capacity SDII container with the remaining PDH content,
- multiplexing means (100) for carrying out SDH synchronous multiplexing not only of the low-capacity containers generated by the first generating means, (600) but also of the low-capacity SDH containers delivered by the second generating means (600), thus generating a new large-capacity SDH container,
- transmission means to transmit the large-capacity SDH container generated by the multiplexing means on an outgoing SDH link in an SDH frame,
- an outgoing SDH link (200).

3. Hybrid multiplexer according to claim 1 or 2, characterised in that the said lower-capacity SDH container generated by the said first or second generating means is the result of a concatenation.

4. Hybrid multiplexer according to claim 2 or 3, characterised in that when the said PDH container contains ATM cells, the said second concentration means also carry out the reduction of ATM cells, eliminating also the empty cells, and the said second generating means (600) also add appropriate padding cells.

5. Hybrid multiplexer according to claim 2, 3 or 4, characterised in that, when a received container contains ATM cells, a FiFo memory is provided between the concentration means and the generating means, to memorise the ATM cells delivered by the concentration means and supply them to the generating means.
